# EUROPÄISCHE PATENTSCHRIFT

(11) **EP 1 678 223 B1**
(45) Veröffentlichungstag und Bekanntmachung des Hinweises auf die Patenterteilung: **07.03.2007**
(21) Anmeldenummer: 04790611.0
(22) Anmeldetag: 18.10.2004
(51) Int. Cl.: C08F 220/38, C04B 24/16

(54) **WASSERLÖSLICHE, SULFOGRUPPENHALTIGE CO-UND TERPOLYMERE, DEREN HERSTELLUNG UND VERWENDUNG ALS STABILISATOREN FÜR WÄSSRIGE BAUSTOFFSYSTEME UND WÄSSRIGE ANSTRICH- UND BESCHICHTUNGSSYSTEME**
WATER-SOLUBLE, SULFONIC GROUP-CONTAINING COPOLYMERS AND TERPOLYMERS, THE PRODUCTION THEREOF AND USE AS STABILIZERS FOR AQUEOUS BUILDING MATERIAL SYSTEMS AND WATER-BASED PAINTING AND COATING SYSTEMS
COPOLYMERES ET TERPOLYMERES SOLUBLES DANS L'EAU ET CONTENANT DES GROUPES SULFO, LEUR PRODUCTION ET LEUR UTILISATION COMME STABILISANTS POUR DES SYSTEMES DE MATERIAU DE CONSTRUCTION AQUEUX ET POUR DES SYSTEMES DE PEINTURE ET DE REVETEMENT A BASE D'EAU

(30) Priorität: 18.10.2003 DE 10348502
(43) Veröffentlichungstag der Anmeldung: 12.07.2006
(73) Patentinhaber: Construction Research & Technology GmbH, 83308 Trostberg (DE)
(72) Erfinder: SCHINABECK, Michael, 84518 Garching (DE); FRIEDRICH, Stefan, 84518 Garching (DE); GATTINGER, Irene, 85757 Karlsfeld (DE); TSELEBIDIS, Andreas, 83368 Anning (DE); ALBRECHT, Gerhard, 83342 Tacherting (DE); KERN, Alfred, 84558 Kirchweidach (DE)
(74) Vertreter: Dey, Michael
(86) Internationale Anmeldenummer: PCT/EP2004/011786
(87) Internationale Veröffentlichungsnummer: WO 2005/035603

(56) Entgegenhaltungen:
- US-B1- 6 187 887
- US-B1- 6 395 853

## Beschreibung

Gegenstand der vorliegenden Erfindung ist die Verwendung von wasserlöslichen sulfogruppenhaltigen Co- und Terpolymeren als Stabilisierer für wässrige Baustoffsysteme auf der Basis hydraulischer Bindemittel wie Zement, Kalk, Gips, Anhydrit usw. sowie in wasserbasierenden Anstrich- und Beschichtungssystemen.

Der Zusatz von Additiven zu hydraulischen bzw. latent hydraulischen Bindemitteln wie bspw. Zement oder Gips ist bekannt. Eine wichtige Gruppe an Zusatzmitteln stellt bspw. die der Fließmittel dar. Damit wird die Erleichterung der Verarbeitbarkeit und insbesondere die Verbesserung der Fließfähigkeit erreicht. Bei hochfließfähigen Mischungen ist jedoch die Tendenz zur Segregation schwererer Bestandteile und zur Absonderung von Blutwasser auf der Oberfläche deutlich erhöht. Dies hat negative Auswirkungen auf die Verarbeitbarkeit und die Festkörpereigenschaften der erhärteten Baustoffmischung. Daher kommen Stabilisierer (auch als Anti-Segregregationsmittel, Anti-Blutmittel oder Viskositätsmodifizierer bezeichnet) zum Einsatz, um diese unerwünschten Effekte zu verhindern. Üblicherweise werden wasserlösliche nichtionische Abkömmlinge von Polysacchariden, insbesondere Cellulose- und Stärkederivate, in wässrigen Baustoffmischungen verwendet. Aber auch mikrobiell erzeugte Polysaccharide wie bspw. Welan Gum kommen entsprechend dem Stand der Technik zum Einsatz, um die unerwünschte Segregation und das Abscheiden von Blutwasser zu verhindern.

Bekannt ist auch der Einsatz von Nanosilica-Aufschlämmungen als Stabilisierer, speziell im Beton. Die Nanosilica-Aufschlämmungen (üblicherweise 20 Gew.-% Feststoffgehalt) müssen jedoch sehr hoch dosiert werden. Weiterhin sind sie nicht stabil (Absetzen des Silica) und müssen vor der Anwendung durch technisch aufwendige Rührvorrichtungen erneut homogenisiert werden.

Auch die Zusatzmittel auf Basis wasserlöslicher nichtionischer Abkömmlinge von Polysacchariden sowie mikrobiell erzeugte Polysaccharide zeigen einige entscheidende Nachteile beim Einsatz in wässrigen Baustoffsystemen:
- Die Anti-Segregations-und Ant-Blut-Eigenschaften werden v.a. durch eine Verdickung (Viskositätserhöhung) der Baustoffmischung erreicht, was eine negative Beeinflussung der Fliesseigenschaften und somit der Verarbeitbarkeit nach sich zieht.
- Für bestimmte Baustoffanwendung (v.a. Beton) ist die Verwendung der Zusatzmittel in Form von wässrigen Lösungen notwendig. Die Herstellung von wässrigen Lösungen der bekannten Zusatzmittel ist jedoch schwierig, da z.B. Celluloseether in der Kälte und Hitze nicht gut löslich sind und teilweise ausflocken. Auch ist die (Lager-)Stabilität aufgrund von Abbaureaktion über die Zeit nicht ausreichend (bakterieller Befall).
- Viele in der Baustoffindustrie eingesetzten Cellulosederivate zeigen abbindeverzögernde Eigenschaften.

Auch in wasserbasierenden Anstrich- und Beschichtungssystemen werden entsprechend dem Stand der Technik v.a. Polysaccharidderivate eingesetzt, um das Absetzen z.B. der Pigmente zu verhindern. Dabei treten ebenfalls Probleme mit der Lagerstabilität der Mischungen aufgrund von mikrobiellem Befall auf

Synthetische Polymere mit stabilisierenden Eigenschaften wurden in der Literatur bisher überwiegend als Additive in Bohrspülungen und bei der Bohrlochzementierung beschrieben. Dort dienen sie zur Reduzierung des Wasserverlusts von Zementschlämmen in die umgebende Gesteinsformation. So werden beispielsweise in der DE 29 31 897 A1, DE 40 34 642 A1, DE 199 26 355 A1 und DE 197 52 093 C2 Co- bzw. Terpolymere auf Basis 2-Acrylamido-2-methylpropansulfonsäure als Hilfsmittel bei der Bohrlochzementierung vorgeschlagen. Diese Polymere sind auf die speziellen Anforderungen der Anwendung im Bohrloch optimiert. Bei Verwendung in Baustoffmischungen wie Mörtel und Beton bzw. wasserbasierenden Anstrich- und Beschichtungssystemen zeigen sie Nachteile für den Anwender , da entweder die Fließeigenschaften zu stark eingeschränkt werden oder die Abscheidung von Blutwasser nicht verhindert wird.

In JP 10053627 werden Terpolymere aus N-Vinylacetamid, 2-Acrylamido-2-methylpropansulfonsäure und Acrylnitril als Stabilisierer für hochfließfähigen Beton beschrieben. Diese Terpolymere zeigen zwar eine gute stabilisierende Wirkung, können aber auch die Abscheidung von Blutwasser nicht verhindern. Zudem ist das Preis/Leistungsverhältnis verglichen mit Celluoseethern deutlich schlechter, da mit dem N-Vinylacetamid ein sehr hochpreisiges Monomer verwendet wird, so dass dem Anwender ein erheblicher wirtschaftlicher Nachteil entsteht.

In der DE 198 06 482 A1 und DE 100 37 629 A1 werden sulfogruppenhaltige quartäre Polymere beschrieben, die sehr gute Wasserrückhaltungs-Eigenschaften zeigen. Darüber hinaus besitzen sie auch eine sehr gute stabilisierende Wirkung, indem sie die plastische Viskosität der Mischung stark heraufsetzen. Durch diese starke Verdickung wird allerdings die Verarbeitbarkeit der Baustoffmischung bzw. des wasserbasierenden Anstrich- und Beschichtungssystems für den Anwender in einem inakzeptablen Maße eingeschränkt. Zwar lässt sich durch Zugabe bzw. Erhöhung der Dosierung von Fließmitteln die plastische Viskosität wieder absenken, jedoch sind die zusätzlich anfallenden Kosten für das Fließmittel ein erheblicher wirtschaftlicher Nachteil für den Anwender.

Im Falle von gepumpten Baustoffsystemen (z.B. Pumpbeton, Zement- oder Calciumsulfat-Fließestriche) ist die Segregation von groben Zuschlägen ein ebenfalls oft auftretendes Problem. Durch das Absetzen v.a. des Kies kommt es zu Verstopfungen in den Schlauchleitungen, was zu erheblichen Zeitverzögerungen und somit Zusatzkosten führt. Die in der DE 198 064 82 A1 und DE 100 37 629 A1 beschriebenen sulfogruppenhaltigen quartären Polymere zeigen auch für diese Anwendung als sog. Pumphilfe gute Eigenschaften, da sie die Segregation der Zuschläge verhindern. Allerdings verursacht die Verdickung des Betons durch die zugesetzten Polymere eine deutliche Heraufsetzung des Pumpendrucks, was einen erhöhten Pumpenverschleiß zur Folge hat und somit erhebliche Folgekosten verursacht.

Der vorliegenden Erfindung lag daher die Aufgabe zugrunde, kostengünstige Stabilisierer für wässrige Baustoffsysteme sowie wasserbasierende Anstrich- und Beschichtungssysteme bereitzustellen, welche die genannten Nachteile des Standes der Technik nicht aufweisen, sondern eine hervorragende stabilisierende Wirkung aufweisen und gleichzeitig die Viskosität des Systems nicht stark heraufsetzen, so dass die Verarbeitbarkeit nicht negativ beeinflusst bzw. im Falle von gepumpten Baustoffmischungen der Pumpendruck nicht signifikant erhöht wird. Weiterhin sollen die Co- bzw. Terpolymere eine hohe Effektivität in der Dosierung besitzen, keine abbindeverzögernden Eigenschaften einbringen, in wässriger Lösung eine sehr gute Lagerstabilität über die Zeit zeigen sowie kompatibel mit anderen Additiven sein.

Diese Aufgabe wurde erfindungsgemäß gelöst durch die wasserlöslichen sulfogruppenhaltigen Co- bzw. Terpolymere aus den Baugruppen a) sowie b) und/oder c) gemäß Anspruch 1.

Es wurde hierbei überraschenderweise gefunden, dass diese Produkte bei deutlich geringerer Dosierung im Vergleich zu konventionellen Stabilisierern eine hervorragende Wirksamkeit aufweisen. Darüber hinaus setzen sie die Viskosität der Baustoffmischung bzw. des wasserbasierenden Anstrich- und Beschichtungssystems nicht wesentlich herauf, so dass keine negative Auswirkung auf die Verarbeitbarkeit beobachtet wird.

Auch beim Einsatz als Pumphilfsmittel in Baustoffsystemen (z.B. Pumpbeton, Zement- oder Calciumsulfat-Fließestrich) wird eine sehr gute stabilisierende Wirkung gefunden, ohne dass der Pumpendruck wesentlich heraufgesetzt wird, was einen weiteren erheblichen Vorteil für den Anwender darstellt.

Weiterhin weisen die wässrigen Lösungen der Co- und Terpolymere eine sehr gute Lagerstabilität auf, was bei der Anwendung bspw. im Beton ebenfalls einen deutlichen Vorteil in der Praxis mit sich bringt.

Die erfindungsgemäßen Polymere enthalten mindestens zwei Baugruppen a), b) und/oder c).

Die erste Baugruppe a) stellt ein sulfogruppenhaltiges substituiertes Acryl- oder Methacrylderivat der Formel I dar: 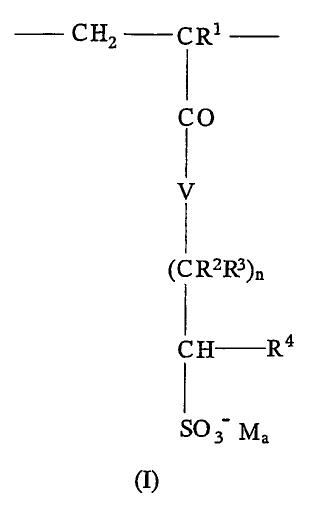 mit R¹ = Wasserstoff oder Methyl, R², R³, R⁴ = Wasserstoff, aliphatischer Kohlenwasserstoffrest mit 1 bis 6 C-Atomen, ggf. mit Methylgruppen substituierter Phenylrest, V = NH oder Sauerstoff und M = Wasserstoff, ein- oder zweiwertiges Metallkation, Ammonium oder ein organischer Aminrest, n = 1 bis 5 sowie a =½ oder 1. Als ein- oder zweiwertiges Metallkation finden vorzugsweise Natrium-, Kalium-, Calcium- oder Magnesiumionen Verwendung. Als organische Aminreste werden vorzugsweise substituierte Ammoniumgruppen eingesetzt, die sich ableiten von primären, sekundären oder tertiären C₁- bis C₂₀-Alkylaminen, C₁- bis C₂₀-Alkanolaminen, C₅- bis C₈-Cycloalkylaminen und C₆- bis C₁₄-Arylaminen. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin sowie Diphenylamin in der protonierten Ammoniumform.

Die Baugruppe a) leitet sich ab von Monomeren wie 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure, 3-(Methacryloyl-oxy)-propansulfonsäure.

Besonders bevorzugt ist 2-Acrylamido-2-methylpropansulfonsäure.

Die zweite Baugruppe b) entspricht der Formel II: 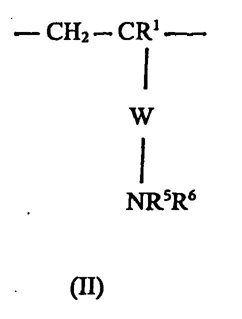 worin W = -CO-O-(CH₂)ₓ-, -CO-NR²-(CH₂)ₓ-, x = 1 bis 6 darstellen und R¹ sowie R² oben genannte Bedeutung besitzen.

R⁵ und R⁶ stehen unabhängig voneinander für Wasserstoff, einen aliphatischen Kohlenwasserstoffrest mit 1 bis 20 C-Atomen, einen cycloaliphatischen Kohlenwasserstoffrest mit 5 bis 8 C-Atomen oder einen Arylrest mit 6 bis 14 C-Atomen. Diese Reste können ggf. mit Hydroxyl-, Carboxyl- oder Sulfonsäuregruppen substituiert sein.

Als Monomere, welche die Struktur (II) bilden, kommen vorzugsweise folgende Verbindungen in Frage: [3-(Methacryloylamino)-propyl]-dimethylamin, [3-(Acryloylamino)-propyl]-dimethylamin, [2-(Methacryloyl-oxy)-ethyl]-dimethylamin usw.

Die dritte Baugruppe c) entspricht der Formeln III 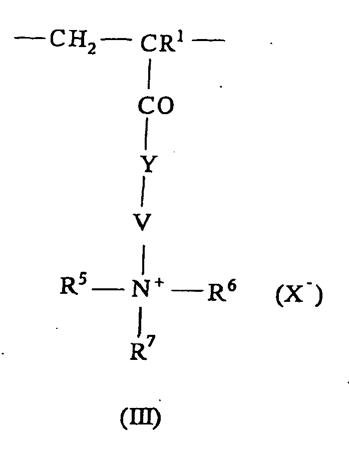 worin Y = O, NH oder NR⁵
V = -(CH₂)ₓ-, 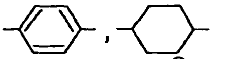 R⁷ = R⁵ bzw. R⁶, -(CH₂)ₓ-SO₃^{⊖}Ma, 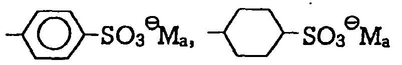 X = Halogen (vorzugsweise Cl, Br), C₁- bis C₄-Alkylsulfat (vorzugsweise Methylsulfat) oder C₁- bis C₄-Alkylsulfonat und
R¹, R⁵, R⁶, M, a und x oben genannte Bedeutung besitzen.

Als Monomere, welche die Struktur (III) bilden, kommen vorzugsweise folgende Verbindungen in Frage: [2-(Acryloyloxy)-ethyl]-trimethyl- ammoniumchlorid, [2-(Acryloylamino)-ethyl]-trimethyl-ammoniumchlorid, [2-(Acryloyloxy)-ethyl]-trimethyl- ammoniummethosulfat, [2-(Methacryloyl-oxy)-ethyl]-trimethylammoniumchlorid bzw. -methosulfat, [3-(Methacryloylamino)-propyl]-trimethylammoniumchlorid, N-(3-Sulfopropyl)-N-methylacryloxyethyl-N-N-dimethyl-anunonium-betain, N-(3-Sulfopropyl)-N-methylacrylamidopropyl-N,N-dimethyl-ammonium-betain und 1-(3-Sulfopropyl)-2-vinyl-pyridinium-betain.

Es ist als erfindungswesentlich anzusehen, dass die Co- bzw. Terpolymere 3 bis 96 Mol-% der Baugruppe a), 3 bis 96 Mol-% der Baugruppe b) und/oder 0,05 bis 75 Mol-% der Baugruppe c) enthalten. Vorzugsweise verwendete Polymere enthalten 40 bis 80 Mol-% a), 10 bis 55 Mol-% b) und/oder 2 bis 30 Mol-% c).

Es hat sich im Rahmen der vorliegenden Erfindung als besonders vorteilhaft erwiesen, dass der molare Anteil der Baugruppe c) um mindestens 5 Mol-% niedriger ist als der molare Anteil der Baugruppe a).

Die Herstellung der erfindungsgemäßen Copolymere erfolgt in an sich bekannter Weise durch Verknüpfung der die Strukturen a) bis c) bildenden Monomere durch radikalische, ionische oder komplex koordinative Substanz-, Lösungs-, Gel-, Emulsions-, Dispersions- oder Suspensionspolymerisation. Da es sich bei den erfindungsgemäßen Produkten um wasserlösliche Copolymere handelt, ist die Polymerisation in wässriger Phase, die Polymerisation in umgekehrter Emulsion bzw. die Polymerisation in inverser Suspension bevorzugt. In besonders bevorzugten Ausführungsformen erfolgt die Umsetzung als Gelpolymerisation in wässriger Phase.

Bei der bevorzugten Gelpolymerisation ist es vorteilhaft, wenn man bei niedrigen Reaktionstemperaturen und mit einem geeigneten Initiatorsystems polymerisiert.

Durch die Kombination zweier Initiatorsysteme (Azoinitiatoren und Redoxsystem), die zuerst photochemisch bei niedrigen Temperaturen und anschließend aufgrund der Exothermie der Polymerisation thermische gestartet werden, kann ein Umsatz von >= 99 % erreicht werden.

Sonstige Hilfsmittel, wie Molekulargewichtsregler, z. B. Thioglykolsäure, Mercaptoethanol, Ameisensäure und Natriumhypophosphit können ebenfalls verwendet werden.

Die Aufarbeitung des Gelblocks wird durch die Verwendung eines Trennmittels (z.B. Sitren 595 von der Firma Goldschmidt), welches das Verkleben des Gelgranulats verhindert, erleichtert. Die rieselfähigen Gelteilchen sind deshalb leichter auf ein Trockengitter zu verteilen. Dadurch wird der Trocknungsprozess erleichtert und es können sogar die Trockenzeiten verkürzt werden.

Die Gelpolymerisation erfolgt vorzugsweise bei -5 bis 50 °C, wobei die Konzentration der wässrigen Lösung bevorzugt auf 40 bis 70 Gew.-% eingestellt wird. Zur Durchführung der Polymerisation gemäß einer bevorzugten Ausführungsform wird das sulfogruppenhaltige (Meth-) Acrylderivat in Form seiner handelsüblichen Säureform in Wasser gelöst, durch Zugabe eines Alkalimetallhydroxids neutralisiert, unter Rühren mit weiteren erfindungsgemäß zu verwendenden Monomeren sowie mit Puffern, Molekulargewichtsreglern u.a. Polymerisationshilfsmitteln vermischt. Nach Einstellung des Polymerisations-pH-Wertes, der vorzugsweise zwischen 4 und 9 liegt, erfolgt eine Spülung des Gemisches mit einem Schutzgas wie Helium oder Stickstoff und anschließend die Aufheizung oder Abkühlung auf die entsprechende Polymerisationstemperatur. Wählt man die ungerührte Gelpolymerisation als Ausführungsform, wird in bevorzugten Schichtdicken von 2 bis 20 cm, insbesondere 8 bis 10 cm bei adiabatischen Reaktionsbedingungen polymerisiert. Die Polymerisation wird durch Zugabe des Polymerisationsinitiators und durch Bestrahlung mit UV-Licht bei niedrigen Temperaturen (zwischen -5 und 10 °C) gestartet. Das Polymer wird nach vollständigem Umsatz der Monomere unter Einsatz eines Trennmittels (z.B. Sitren 595 von der Firma Goldschmidt) zerkleinert, um durch eine größere Oberfläche das Trocknen zu beschleunigen.
Durch die möglichst schonenden Reaktions- und Trocknungsbedingungen können vernetzende Nebenreaktionen vermieden werden, so dass man Polymere erhält, die einen sehr geringen Gelanteil besitzen.

Die erfindungsgemäßen Co- bzw. Terpolymere besitzen vorzugsweise ein zahlenmittleres Molekulargewicht Mₙ von 50.000 bis 20.000.000 g/Mol und eignen sich hervorragend als Zusatzmittel für wässrige Baustoffsysteme, die hydraulische Bindemittel wie Zement, Kalk, Gips, Anhydrit usw. enthalten. Darüber hinaus sind sie in wasserbasierenden Anstrich- und Beschichtungssystemen anwendbar.

Die bevorzugten Einsatzmengen der erfindungsgemäßen Co- bzw. Terpolymere liegen in Abhängigkeit von der Verwendungsart zwischen 0,01 und 5 Gew.-% bezogen auf das Trockengewicht des Baustoff-, Anstrich- bzw. Beschichtungssystems.

Die getrockneten Copolymere werden in Pulverform für Trockenmörtelanwendungen (z.B. Vergussmörtel, Fließestriche auf Basis Calciumsulfat) ihrer erfindungsgemäßen Verwendung zugeführt. Im Beton dagegen werden Zusatzmittel allgemein und auch Stabilisierer im speziellen bevorzugt in Form wässriger Lösungen eingesetzt. Dabei darf die Viskosität der Stabilisierer-Lösungen nicht über ca. 1000 mPa*s liegen, da sonst das Handling durch den Anwender unzumutbar erschwert wird. Die erfindungsgemäßen Polymere lassen sich gut in Wasser lösen, ergeben aber in allen Fällen bei einer Konzentration von 1 Mol-% eine Lösungsviskosität von unter 1000 mPa*s (siehe Tabelle 2). Für den Anwender ist aber aus logistischen Gründen (Vorratshaltung etc.) ein möglichst hoher Wirkstoffgehalt der wässrigen Stabilisiererlösung vorteilhaft. Bei einem Polymergehalt von 2 Mol-% ergeben sich jedoch Viskositäten, die deutlich über 1000 mPa*s liegen (siehe Tabelle 2) und somit aufgrund der hohen Viskosität für den Anwender nachteilig sind. Durch Zusatz von 1 Mol-% Salz lassen sich Viskositäten erhalten, die in allen Fällen wieder unter 1000 mPa*s liegen.

Um diesen Effekt zu erzielen, können Alkali- und Erdalkalisalze von Mineralsäuren verwendet werden, aber auch von einfachen organischen Säuren wie beispielsweise Ameisensäure oder Essigsäure. Bestimmte Salze wie Halogenide oder Nitrate wären aber für den Anwender nachteilig, da sie negative Eigenschaften v.a. für die Dauerhaftigkeit des Betons mit sich bringen. Bevorzugt ist daher die Verwendung von Alkalisulfaten, besonders bevorzugt ist Natriumsulfat.

Die Co- und Terpolymere besitzen ausgezeichnete stabilisierende Eigenschaften bereits in niedriger Dosierung und verleihen pigmenthaltigen Anstrichstoffen, Putzen, Klebemörteln, Spachtelmassen, Fugenfüllern, Spritzbeton, Fliessbeton, selbstverdichtendem Beton, Unterwasserbeton, Unterwassermörtel u. a. hervorragende anwendungstechnische Eigenschaften sowohl im Verarbeitungs- als auch im erhärteten bzw. getrockneten Zustand. Dabei wird die Viskosität der Baustoffinischung durch den Zusatz der Co- bzw. Terpolymere nicht wesentlich beeinflusst, so dass die Verarbeitbarkeit nicht beeinträchtigt wird. Außerdem weisen die wässrigen Lösungen der erfindungsgemäßen Co- und Terpolymere eine sehr gute Lagerstabilität auf.

Es werden wasserlösliche Co- und Terpolymere als Stabilisierer für wässrige Baustoffsysteme sowie wasserbasierende Anstrich- und Beschichtungssysteme beschrieben. Der Vorteil der erfindungsgemäß eingesetzten Co- und Terpolymeren gegenüber konventionellen Produkten liegt zum einen in den sehr guten stabilisierenden Eigenschaften der entsprechend hergestellten Baustoffsysteme bzw. wasserbasierenden Anstrich- und Beschichtungssysteme und zum anderen an der Tatsache, dass die Viskosität der Systeme kaum heraufgesetzt wird, so dass diese eine hervorragende Verarbeitbarkeit besitzen.

Die nachfolgenden Beispiele sollen die Erfindung näher veranschaulichen.

### Beispiele

### Beispiel A1: Stabilisierer A

In einem 1 1-Dreihalskolben mit Rührer und Thermometer werden 400 g Wasser vorgelegt. Unter Rühren wurden 87 g Natriumhydroxid-Plätzchen aufgelöst und langsam 450 g (2,17 Mol; 75 Mol-%) 2-Acrylamido-2-methylpropansulfonsäure zugegeben und bis zum Erhalt einer klaren Lösung gerührt. Nach Zusatz von 0,50 g Citronensäurehydrat wurden unter Rühren und Kühlen mit 5 Gew.-%ige wässrige Natronlauge zugesetzt und ein pH-Wert von 4,60 eingestellt. Anschließend wurden 331,5 g (0,72 Mol; 25 Mol-%) [2-(Methacrylamido)-propyl]-trimethylammoniumchlorid (50 Gew.-%ige Lösung in Wasser) zugesetzt. Die Lösung wurde mit 20%iger Natronlauge auf pH = 6,0 eingestellt und durch 30 minütige Spülung mit Stickstoff inertisiert und auf ca. 5 °C abgekühlt. Die Lösung wird in einen Plastikbehälter mit den Maßen (b*t*h) 15 cm *10cm *20 cm umgefüllt und anschließend werden nacheinander 150 mg 2,2'-Azo-bis-(2-amidinopropan)-dihydrochlorid, 1,0 g 1 %iger Rongalitlösung und 10 g 0,1%iger tert-Butylhydroperoxidlösung zugesetzt. Die Polymerisation wird durch Bestrahlen mit UV-Licht (zwei Philips Röhren; Cleo Performance 40W) gestartet. Nach ca. 2-3 h wird das harte Gel aus dem Plastikbehälter genommen und mit einer Schere in ca. 5 cm* 5 cm* 5 cm große Gelwürfel geschnitten. Bevor die Gelwürfel mittels eines herkömmlichen Fleischwolfs zerkleinert werden, werden Sie mit dem Trennmittel Sitren 595 (Polydimethylsiloxan-Emulsion; Firma Goldschmidt) eingestrichen. Bei dem Trennmittel handelt es sich um eine Polydimethylsiloxanemulsion, die 1:20 mit Wasser verdünnt wurde.

Das erhaltene Gelgranulat wird gleichmäßig auf Trockengitter verteilt und in einem Umlufttrockenschrank bei ca. 90 -120 °C im Vakuum bis zur Gewichtskonstanz getrocknet.

Es wurden ca. 600 g eines weißen, harten Granulats erhalten, welches mit Hilfe einer Zentrifugalmühle in einen pulverigen Zustand überführt wurde.

### Beispiel A2: Stabilisierer B

Entsprechend Beispiel 1 wurde der Stabilisierer B als Terpolymer aus 65 Mol-% 2-Acrylamido-2-methylpropansulfonsäure (I), 25 Mol-% [2-(Methacryloyl-oxy)-ethyl]-dimethylamin (II) und 10 Mol-% [3-(Methacrylamino)-propyl]-trimethylammoniumchlorid (III) hergestellt.

### Beispiel A3: Stabilisierer C

Entsprechend Beispiel 1 wurde der Stabilisierer C als Mischpolymer aus 65 Mol-% 2-Acrylamido-2-methylpropansulfonsäure (I), 15 Mol-% [2-(Methacryloyl-oxy)-ethyl]-tertiär-butylamin (II) und 20 Mol-% [2-(Acryloylamino)-ethyl]-trimethylammoniumchlorid (III) hergestellt.

### Beispiel A4: Stabilisierer D

Entsprechend Beispiel 1 wurde der Stabilisierer D als Terpolymer aus 75 Mol-% 2-Acrylamido-2-methylpropansulfonsäure (I), 20 Mol-% [2-(Methacryloyl-oxy)-ethyl]-diethylamin (II) und 5 Mol-% [3-(Methacryloylamino)-propyl]-trimethylammoniumchlorid (III) hergestellt.

### Beispiel A5: Stabilisierer E

Entsprechend Beispiel 1 wurde der Stabilisierer E als Terpolymer aus 80 Mol-% 2-Acrylamido-2-methylpropansulfonsäure (I), 15 Mol-% [2-(Methacryloyl-oxy)-ethyl]-tertiär-butylamin (II) und 5 Mol-% [2-(Methacryloylamino)-ethyl]-trimethylammoniumchlorid (III) hergestellt.

In der Tabelle 1 werden die Zerkleinerungseigenschaften und die notwendigen Trocknungszeiten angegeben. Die Restfeuchte des gemahlenen Pulvers ist ein Maß für die Vollständigkeit des Trocknungsprozesses.

**Tabelle 1**

| | Geleigen- | Trocknung | | Restfeuchte |
|---|---|---|---|---|
| | schaften | Temperatur | Zeit | |
| | | [°C] | [min] | [%] |
| Stabilisierer A | sehr harte deine gut rieselfähige Teilchen | 100 | 80 | 4 |
| Stabilisierer B | analog Beispiel 1 | 90 | 100 | 6 |
| Stabilisierer C | analog Beispiel 1 | 120 | 80 | 8 |
| Stabilisierer D | analog Beispiel 1 | 100 | 70 | 4 |
| Stabilisierer E | analog Beispiel 1 | 100 | 70 | 5 |

In Tabelle 2 sind Lösungsviskositäten von wässrigen Lösungen angegeben.

**Tabelle 2**

| | Viskosität 1,0 % ige Lsg. | Viskosität 2,0 % ige Lsg. | Viskosität 2,0 % ige Lsg mit 1 % Na₂SO₄. |
|---|---|---|---|
| | [mPa*s]* | [mPa*s]* | [mPa*s]* |
| Stabilisierer A | 767 | 1630 | 753 |
| Stabilisierer B | 845 | 1810 | 821 |
| Stabilisierer C | 674 | 1334 | 662 |
| Stabilisierer D | 910 | 1942 | 894 |
| Stabilisierer E | 963 | 2014 | 948 |

| | | | |
|---|---|---|---|
| *20 °C, Brookfield, in H₂O (Gemessen bei 5 Umdrehungen pro Minute) | | | |

### Anwendungsbeispiele

Die folgenden Beispiele erläutern die stabilisierende Wirkung der erfindungsgemäßen Co- und Terpolymeren in bezug auf die Segregations- und Fließfähigkeitseigenschaften einiger Beton- bzw. Mörtel-Rezepturen.

Die Betone wurden im Labor mit einem 50 Liter Zwangsmischer gemischt. Der Wirkungsgrad des Mischers lag bei 45 %.

Beim Mischvorgang der selbstverdichtenden Betone wurden zunächst Zuschläge und mehlfeine Stoffe 10 Sekunden im Mischer homogenisiert, bevor anschließend das Anmachwasser, das Fließmittel und der Stabilisierer (als wässrige Lösung bzw. als Pulver) zugegeben wurden. Die Mischzeit betrug 4 Minuten. Im Anschluss wurde die Frischbetonprüfungen (Setzfließmaß, Luftporen-Gehalt) durchgeführt und bewertet.

Der Konsistenzverlauf wurde über 120 Minuten beobachtet.

Für Austestungen mit selbstverdichtendem Beton wurden folgende Prüfgeräte benutzt:
Zur Bestimmung der Fließfähigkeit wurde ein sog. Abrams-Cone Setztrichter (Innendurchmesser oben 100 mm, Innendurchmesser unten 200 mm, Höhe 300 mm) verwendet (Setzfließmaß = über zwei senkrecht zueinander stehende Achsen gemessener und gemittelter Durchmesser des Betonkuchens in cm).

Die Bestimmung des Setzfließmaßes wurde pro Mischung fünfmal durchgeführt, und zwar zu den Zeitpunkten t = 0, 30, 60, 90 und 120 Minuten nach Mischende, wobei die Mischung vor der jeweiligen Fließmaßbestimmung mit dem Betonmischer 60 Sekunden lang wieder durchgemischt wurde.

Zur Bestimmung des Luftporengehaltes wurde ein Luftporentopf (Inhalt 8 Liter) verwendet, wie er in DIN 1048 (T1) beschrieben ist.

Das Bluten (Abscheidung von Wasser an der Oberfläche des noch nicht erhärteten Baustoffs) und die Segregation der Mischungen wurden visuell beurteilt.

Beim Mischvorgang der Betone gemäß DIN 1048 (T 1) wurden zunächst Zuschläge und mehlfeine Stoffe 10 Sekunden im Mischer homogenisiert, bevor anschließend 13 Gew.-% des Anmachwassers zugegeben wurde und zwei Minuten gemischt wurde. Anschließend wurde das restliche Wasser zugegeben und für eine weitere Minute gemischt, bevor dass Fließmittel und der Stabilisierer zugegeben wurden und diese ebenfalls eine Minute lang gemischt wurden.
Das Ausbreitmaß wurde gemäß DIN 1048 (T 1) bestimmt und zwar zu den Zeitpunkten t = 0, 30, 60, 90 und 120 Minuten nach Mischende.

Die zementären Mörtel und Anhydrit-Fließestriche wurden im Labor mit einem Mörtelmischer nach DIN EN 196-1 gemischt. Auch der Mischvorgang wurde wie in DIN EN 196-1 beschrieben durchgeführt. Die Mischzeit betrug 4 min.
Die Fließmaße (= Durchmesser des Ausbreitkuchens in cm) wurden mit einem in DIN EN 196 Teil 3 beschriebenen Vicat-Ring (Innendurchmesser oben = 70 mm, Innendurchmesser unten = 80 mm, Höhe = 40 mm) auf einer ebenen, trockenen Glasplatte bestimmt (die Mischung wurde vor der Fließmaßbestimmung mit dem Löffel 60 Sekunden lang wieder aufgerührt).

Kelco-Crete (Welan Gum) der Fa. CP Kelco, Stabilisierer ST 2 (Celluloseether) der Fa. Sika Addiment (Leimen) sowie die Celluloseether Tylose H 20 P2 und Tylose MH 2000 YP2 (Produkte der Fa. Clariant GmbH), Frankfurt wurden als Vergleichssubstanzen zu den erfindungsgemäßen Co- bzw. Terpolymeren eingesetzt.

### Beispiel B1: Selbstverdichtender Beton mit geringem Feinkornanteil

Vergleich von konventionellem und erfindungsgemäßem Stabilisierer.

**Rezepturen: Feinkornanteil 450 kg/m³ (Zement + Flugasche)**

| | ohne Stabilisierer (Vergleich) | Kelco-Crete Handelsprodukt der Fa. CP Kelco (Vergleich) | Erfindungsgemäßer Stabilisierer A (Erfindung) |
|---|---|---|---|
| CEM I 42,5 R | 275 kg/m³ | 275 kg/m³ | 275 kg/m³ |
| Sand (0-2 mm) | 868 kg/m³ | 868 kg/m³ | 868 kg/m³ |
| Kies (2-8 mm) | 330 kg/m³ | 330 kg/m³ | 330 kg/m³ |
| Kies (8-16 mm) | 538 kg/m³ | 538 kg/m³ | 538 kg/m³ |
| Flugasche | 175 kg/m³ | 175 kg/m³ | 175 kg/m³ |
| Melflux 2453 L ¹⁾ | 3,1 kg/m³ | 3,1 kg/m³ | 3,1 kg/m³ |
| Stabilisierer | - | 77,0 g/m³ | 49,8 g/m^{3 2)} |
| Wasser | 160 kg/m³ | 160 kg/m³ | 155 kg/m³ |

| | | | |
|---|---|---|---|
| ¹⁾ Produkt der Fa. Degussa Construction Polymers GmbH, Trostberg ²⁾ Zugabe als 1 M.-%ige wässrige Lösung des Stabilisierers A (der Wassergehalt des Stabilisierers wird vom Gesamt-Anmachwasser abgezogen). | | | |

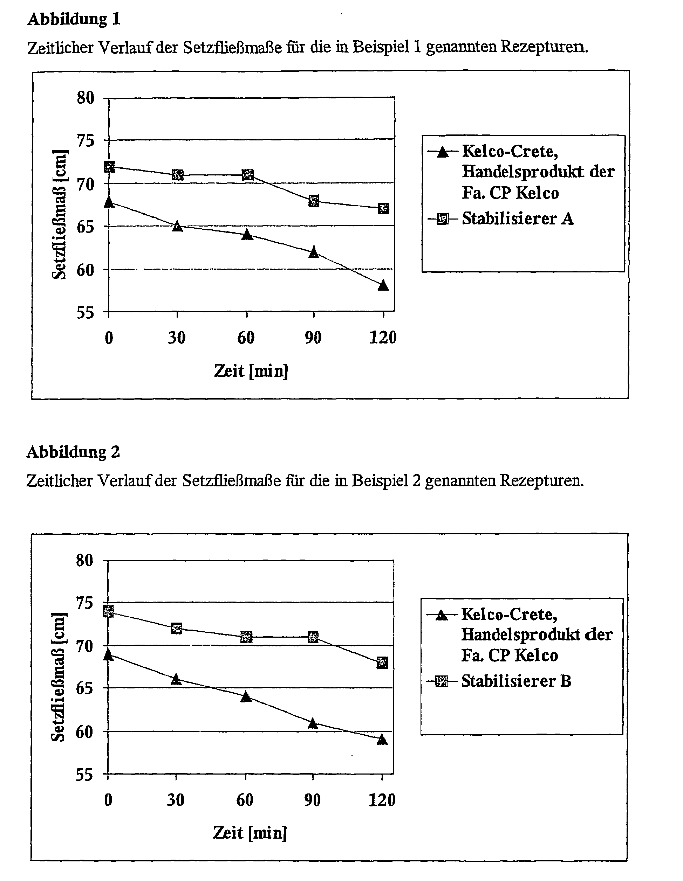

Wie die Ergebnisse zeigen (siehe Abbildung 1), wird bei deutlich niedrigerer Dosierung des erfindungsgemäßen Stabilisierers die Verarbeitbarkeit verbessert. Mit dem erfindungsgemäßen Copolymer wird eine deutlich fließfähigere Mischung erhalten, die auch über die Zeit sehr gute Verarbeitungseigenschaften zeigt. Dabei wird keine Abscheidung von Blutwasser und keine Segregation beobachtet.

**Tabelle 3:**

| Vergleich der Beton-Eigenschaften mit dem konventionellen und erfindungsgemäßen Stabilisierer A. | | | |
|---|---|---|---|
| | Ohne Stabilisierer (Vergleich) | Kelco-Crete Handelsprodukt der Fa. CP Kelco (Vergleich) | Erfindungsgemäßer Stabilisierer A (Erfindung) |
| Bluten | stark | kein | kein |
| Segregation | stark | kein | Kein |
| Luftporengehalt nach 0 min | 1,7 % | 2,1% | 1,7% |
| Luftporengehalt nach 30 min | 2,1 % | 2,0 % | 1,8 % |
| Luftporengehalt nach 60 min | 2,2 % | 2,3 % | 1,7 % |
| Luftporengehalt nach 90 min | 2,4% | 2,3 % | 2,0 % |
| Luftporengehalt nach 120 min | 2,8 % | 2,5 % | 2,1 % |
| Druckfestigkeit nach 1 Tag | 6,3 N/mm² | 10,5 N/mm² | 11 N/mm² |
| Druckfestigkeit nach 7 Tagen | 23,4 N/mm² | 39 N/mm² | 40 N/mm² |
| Druckfestigkeit nach 14 Tagen | 37,5 N/mm² | 47 N/mm² | 49 N/mm² |
| Druckfestigkeit nach 28 Tagen | 47,6 N/mm² | 55 N/mm² | 57 N/mm² |

Die Ergebnisse zeigen, dass die Verarbeitbarkeit des Selbstverdichtenden Betons bei Zusatz des erfindungsgemäßen Stabilisierers A verbessert wird. Die Biegezug- und Druckfestigkeiten werden durch die erfindungsgemäßen Stabilisierer nicht nachteilig beeinflusst.

### Beispiel B2: Selbstverdichtender Beton mit mittlerem Feinkornanteil

Vergleich von konventionellem und erfindungsgemäßem Stabilisierer B.

**Rezepturen: Feinkornanteil 505 kg/m³ (Zement + Flugasche)**

| | Ohne Stabilisierer (Vergleich) | Kelco-Crete Handelsprodukt der Fa. CP Kelco (Vergleich) | Erfindungsgemäßer Stabilisierer B (Erfindung) |
|---|---|---|---|
| CEM I 42,5 R | 290 kg/m³ | 290 kg/m³ | 290 kg/m³ |
| Sand (0-2 mm) | 814 kg/m³ | 814 kg/m³ | 814 kg/m³ |
| Kies (2-8 mm) | 343 kg/m³ | 343 kg/m³ | 343 kg/m³ |
| Kies (8-16 mm) | 517 kg/m³ | 517 kg/m³ | 517 kg/m³ |
| Flugasche | 215 kg/m³ | 215 kg/m³ | 215 kg/m³ |
| Melflux 2453 L ¹⁾ | 3,3 kg/m³ | 3,3 kg/m³ | 3,3 kg/m³ |
| Stabilisierer | - | 84,10 g/m³ | 53,9 g/m^{3 2)} |
| Wasser | 160 kg/m³ | 160 kg/m³ | 160 kg/m³ |

| | | | |
|---|---|---|---|
| ¹⁾ Produkt der Fa. Degussa Construction Polymers GmbH, Trostberg ²⁾ Zugabe als 1 M.-%ige wässrige Lösung des Stabilisierers B (der Wassergehalt des Stabilisierers wird vom Gesamt-Anmachwasser abgezogen). | | | |

Wie die Ergebnisse zeigen (siehe Abbildung 2), wird mit dem erfindungsgemäßen Stabilisierer B bei deutlich niedrigerer Dosierung die Verarbeitbarkeit verbessert. Abscheidung von Blutwasser und Segregation wird nicht beobachtet. Mit dem erfindungsgemäßen Copolymer wird eine deutlich fließfähigere Mischung erhalten, die auch über die Zeit sehr gute Verarbeitungseigenschaften zeigt.

**Tabelle 4:**

| Vergleich der Beton-Eigenschaften mit dem konventionellen und erfindungsgemäßen Stabilisierer B. | | | |
|---|---|---|---|
| | Ohne Stabilisierer (Vergleich) | Kelco-Crete Handelsprodukt der Fa. CP Kelco (Vergleich) | Erfindungsgemäßer Stabilisierer B (Erfindung) |
| Bluten | Stark | kein | Kein |
| Segregation | Stark | kein | Kein |
| Luftporengehalt nach 0 min | 0,8 % | 2,0 % | 2,0 % |
| Luftporengehalt nach 30 min | 1,2 % | 2,2 % | 1,9 % |
| Luftporengehalt nach 60 min | 1,3% | 2,2 % | 1,9% |
| Luftporengehalt nach 90 min | 1,7 % | 2,4 % | 2,0 % |
| Luftporengehalt nach 120 min | 2,7 % | 2,6 % | 2,1 % |
| Druckfestigkeit nach 1 Tag | 2,1 N/mm² | 15 N/mm² | 16 N/mm² |
| Druckfestigkeit nach 7 Tagen | 35,6 N/mm² | 46 N/mm² | 46 N/mm² |
| Druckfestigkeit nach 14 Tagen | 48,2 N/mm² | 53 N/mm² | 56 N/mm² |
| Druckfestigkeit nach 28 Tagen | 55,7 N/mm² | 63 N/mm² | 64 N/mm² |

Die Ergebnisse zeigen, dass die Verarbeitbarkeit des Selbstverdichtenden Betons bei Zusatz des erfindungsgemäßen Stabilisierers B verbessert wird. Die Biegezug- und Druckfestigkeiten werden durch die erfindungsgemäßen Stabilisierer nicht nachteilig beeinflusst.

### Beispiel B3: Beton gemäß DIN 1048 (T1)

Vergleich von konventionellem und erfindungsgemäßem Stabilisierer C.

**Rezepturen:**

| | Ohne Stabilisierer (Vergleich) | Stabilisierer ST 2 Handelsprodukt der Fa. Sika Addiment, Leimen (Vergleich) | Erfindungsgemäßer Stabilisierer C (Erfindung) |
|---|---|---|---|
| CEM I 42,5 R | 295 kg/m³ | 295 kg/m³ | 295 kg/m³ |
| Sand (0-2 mm) | 402 kg/m³ | 402 kg/m³ | 402 kg/m³ |
| Kies (2-8 mm) | 326 kg/m³ | 326 kg/m³ | 326 kg/m³ |
| Kies (8-16 mm) | 1094 kg/m³ | 1094 kg/m³ | 1094 kg/m³ |
| Flugasche | 70 kg/m³ | 70 kg/m³ | 70 kg/m³ |
| Micro-Air ¹⁾ | 0,3 kg/m³ | 0,3 kg/m³ | 0,3 kg/m³ |
| Melflux 2453 L ²⁾ | 2,4 kg/m³ | 2,4 kg/m³ | 2,4 kg/m³ |
| Stabilisierer | - | 5,5 g/m³ | 1,28 g/m^{3 3)} |
| Wasser | 160 kg/m³ | 160 kg/m³ | 160 kg/m³ |

| | | | |
|---|---|---|---|
| ¹⁾ Produkt der Fa. Masterbuilders Inc., Cleveland ²⁾ Produkt der Fa. Degussa Construction Polymers GmbH, Trostberg ³⁾ Zugabe als 1 M.-%ige wässrige Lösung des Stabilisierers C (der Wassergehalt des Stabilisierers wird vom Gesamt-Anmachwasser abgezogen). | | | |

**Tabelle 5:**

| Vergleich der Beton-Eigenschaften mit dem konventionellen und erfindungsgemäßen Stabilisierer C. | | | |
|---|---|---|---|
| | ohne Stabilisierer (Vergleich) | Stabilisierer ST 2 Handelsprodukt der Fa. Sika Addiment, Leimen (Vergleich) | Erfindungsgemäßer Stabilisierer C (Erfindung) |
| Bluten | stark | kein | Kein |
| Segregation | stark | kein | Kein |
| Ausbreitmaß nach 0 min | 58 | 62 | 63 cm |
| Ausbreitmaß nach 30 min | 55 | 58 | 60 cm |
| Ausbreitmaß nach 60 min | 49 | 55 | 58 cm |
| Ausbreitmaß nach 90 min | 45 | 50 | 54 cm |
| Ausbreitmaß nach 120 min | 41 | 44 | 50 cm |
| Druckfestigkeit nach 7 Tagen | 38,1 N/mm² | 41,4 N/mm² | 45,1 N/mm² |
| Druckfestigkeit nach 14 Tagen | 48,8 N/mm² | 51,1 N/mm² | 52,5 N/mm² |
| Druckfestigkeit nach 28 Tagen | 55,2 N/mm² | 57,5 N/mm² | 58,6 N/mm² |

Die Ergebnisse zeigen, dass die Verarbeitbarkeit des Betons bei Zusatz des erfindungsgemäßen Stabilisierers C verbessert wird, da höhere Ausbreitmaße ohne Abscheidung von Blutwasser und Segregation gefunden werden. Die Biegezug- und Druckfestigkeiten werden durch die erfindungsgemäßen Stabilisierer nicht nachteilig beeinflusst.

### Beispiel B4: Vergussmörtel

Vergleich von konventionellem und erfindungsgemäßem Stabilisierer D.

**Rezepturen:**

| | Ohne Stabilisierer (Vergleich) | Tylose H 20 P2 Produkt der Fa. Clariant GmbH, Frankfurt (Vergleich) | Erfindungsgemäßer Stabilisierer D (Erfindung) |
|---|---|---|---|
| CEM I 52,5 R | 680,00 g | 680,00 g | 680,00 g |
| Normensand (0-2 mm) ¹⁾ | 1445,00 g | 1445,00 g | 1445,00 g |
| EFA-Füller ²⁾ | 51,00 g | 51,00 g | 51,00 g |
| CSA 20 ³⁾ | 30,22 g | 30,22 g | 30,22 g |
| Zement/AL-Pulver (995/5) ⁴⁾ | 1,89 g | 1,89 g | 1,89 g |
| Melflux 1641 F ⁵⁾ | 3,4 g | 3,4 g | 3,4 g |
| Stabilisierer | - | 0,8 g | 0,2 g |
| Wasser | 217,6 g | 217,6 g | 217,6 g |

| | | | |
|---|---|---|---|
| ¹⁾ gemäß DIN EN 196-1 ²⁾ Produkt der Fa. Bau Mineral, Herten ³⁾ Calciumsulfoaluminat, Produkt der Fa. Denka, Japan ⁴⁾ Mischung aus 995 Gewichtsteilen CEM I 52,5 R und 5 Gewichtsteilen Al-Pulver (Standard SK I, Produkt der Fa. Eckart, Fürth) ⁵⁾ Produkt der Fa. Degussa Construction Polymers GmbH, Trostberg | | | |

**Tabelle 6:**

| Vergleich der Mörtel-Eigenschaften mit dem konventionellen und erfindungsgemäßen Stabilisierer D. | | | |
|---|---|---|---|
| | ohne Stabilisierer (Vergleich) | Tylose H 20 P2 Produkt der Fa. Clariant GmbH, Frankfurt (Vergleich) | Erfindungsgemäßer Stabilisierer D (Erfindung) |
| Bluten | stark | kein | kein |
| Segregation | stark | kein | kein |
| Fließmaß nach 0 min | 33 cm | 27 cm | 29 cm |
| Fließmaß nach 30 min | 31 cm | 25 cm | 28 cm |
| Fließmaß nach 60 min | 26 cm | 23 cm | 26 cm |

Die Ergebnisse zeigen, dass die Verarbeitbarkeit des Vergussmörtels bei Zusatz des erfindungsgemäßen Stabilisierers D verbessert wird.

### Beispiel B5: Fließestrich auf Basis Synthese-Anhydrit

Vergleich von konventionellem und erfindungsgemäßem Stabilisierer E.

**Rezepturen:**

| | ohne Stabilisierer (Vergleich) | Tylose MH 2000 YP2 Produkt der Fa. Clariant GmbH, Frankfurt (Vergleich) | Erfindungsgemäßer Stabilisierer E (Erfindung) |
|---|---|---|---|
| Synthese-Anhydrit | 350,00 g | 350,00 g | 350,00 g |
| Normensand (0-2 mm) | 402,70 g | 402,40 g | 402,55 g |
| Quarz-Füller | 240,00 g | 240,00 g | 240,00 g |
| CEM I 42,5 R | 7,00 g | 7,00 g | 7,00 g |
| Melflux 1641 F ¹⁾ | 0,30 g | 0,30 g | 0,30 g |
| Stabilisierer | - | 0,30 g | 0,15 g |
| Wasser | 170,00 g | 170,00 g | 170,00 g |

| | | | |
|---|---|---|---|
| ¹⁾ Produkt der Fa. Degussa Construction Polymers GmbH, Trostberg | | | |

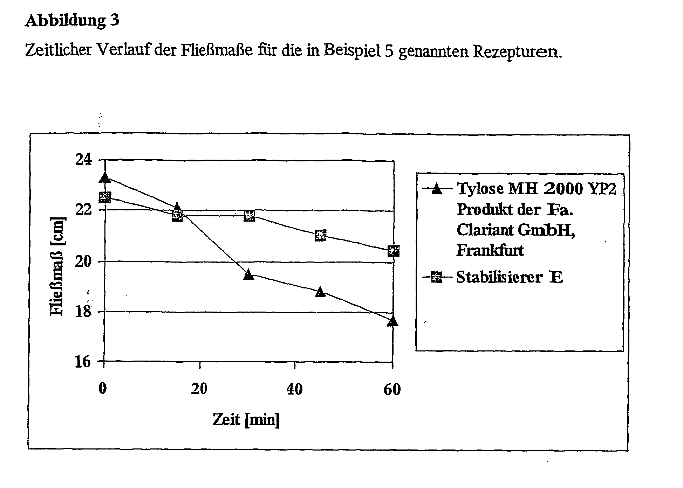

Wie die Ergebnisse zeigen (siehe Abbildung 3), wird bei Zusatz des erfindungsgemäßen Polymers die Verarbeitbarkeit verbessert.

**Tabelle 7:**

| Vergleich der Fließestrich-Eigenschaften mit dem konventionellen und erfindungsgemäßen Stabilisierer. | | | |
|---|---|---|---|
| | Ohne Stabilisierer (Vergleich) | Tylose MH 2000 YP2 Produkt der Fa. Clariant GmbH, Frankfurt (Vergleich) | Erfindungsgemäßer Stabilisierer E ¹⁾ (Erfindung) |
| Bluten | stark | kein | kein |
| Segregation | stark | kein | kein |

## Patentansprüche

1. Wasserlösliche sulfogruppenhaltige Co- und Terpolymeren mit einem zahlenmittleren Molekulargewicht von 50 000 bis 20 000 000 g/mol bestehend aus:
a) 3 bis 96 Mol-% Baugruppen der Formel I 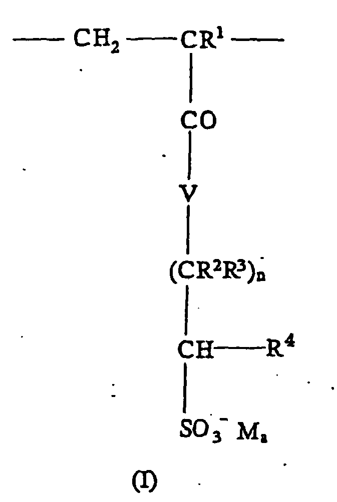 wobei R¹ = Wasserstoff öder Methyl
R², R³, R⁴ = Wasserstoff, aliphatischer Kohlenwasserstoffrest mit 1 bis 6 C-Atomen, ggf. mit Methylgruppen substituierter Phenylrest
V = NH oder Sauerstoff
M = Wasserstoff. ein oder zweiwertiges Metallkation, Ammonium oder ein organischer Aminrest
n = 1 bis 5
a = ½ oder 1
bedeuten,
b) 3 bis 96 Mol-% Baugruppen der Formel II 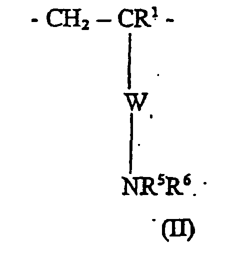 worin W = -CO(O)-(CH₂)ₓ-, -CO-NR²-(CH₂)ₓ-
x=1 bis 6
R⁵ und R⁶ = Wasserstoff, ggf. substituierter aliphatischer Kohlenwasserstoffrest mit 1 bis 20 C-Atomen, cycloaliphatischer Kohlenwasserstoffrest mit 5 bis 8 C- Atomen, Arylrest mit 6 bis 14 C-Atomen darstellt und
R¹ unf R² oben genannte Bedeutung besitzt,
und/oder
c) 0,05 bis 75 Mol-% Baugruppen der Formel III 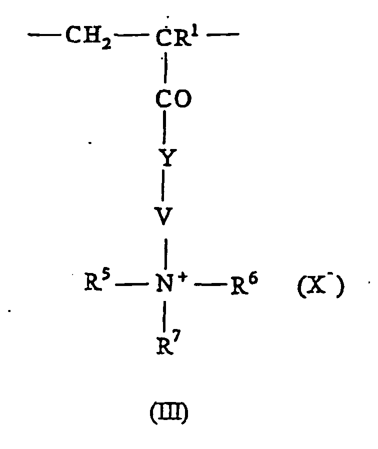
worin Y = O, NH oder NR⁵
V = -(CH₂)ₓ-, 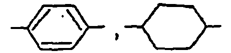 R⁷ = R⁵ bzw. R⁶, -(CH₂)ₓ-SO₃^{⊖}Ma, 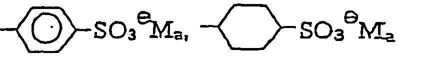 X = Halogen, C₁- bis C₄-Alhylsulfat oder C₁- bis C₄-Alkylsulfonat
und R¹, R⁵, R⁶, M, a und x oben genannte Bedeutung besitzen,
als Stabilisierer für wässrige Baustoffsysteme und wasserbasierende Anstrich- und Beschichtungssysteme.

2. Copolymere nach Anspruch 1, **dadurch gekennzeichnet, dass** das ein- oder zweiwertige Kation ein Natrium-, Kalium-, Calcium- oder Magnesium-Ion darstellt und dass X = Chlor, Brom, Sulfat oder Methylsulfat darstellt.

3. Copolymere nach Anspruch 1 oder 2, **dadurch gekennzeichnet, dass** die Baugruppe a) aus 2-Acrylamido-2-methylpropansulfonsäure oder deren Salzen besteht

4. Copolymere nach Anspruch 1 bis3, **dadurch gekennzeichnet, dass** die organischen Aminreste vorzugsweise substituierte Ammoniumgruppen darstellen, die sich ableiten von primären, sekundären oder tertiären C₁- bis C₂₀-Alkylaminen, C₁- bis C₂₀-Alkanolaminen, C₅- bis C₈-Cycloalkylaminen und C₆-bis C₁₄-Arylaminen.

5. Copolymere nach einem der Ansprüche 1 bis 4, **dadurch gekennzeichnet, dass** die Kohlenwasserstoff- oder Arylreste von R⁵ und R⁶ noch mit Hydroxyl-, Carboxyl- oder Sulfonsäuregruppen substituiert sind.

6. Copolymere nach einem der Ansprüche 1 bis 5, **dadurch gekennzeichnet, dass** sie aus 40 bis 80 Mol-% der Baugruppe a), 10 bis 55 Mol-% der Baugruppe b) und/oder 7 bis 25 Mol-% der Baugruppe c) bestehen.

7. Copolymere nach einem der Ansprüche 1 bis 6, **dadurch gekennzeichnet, dass** der molare Anteil der Baugruppe c) um mindestens 5 Mol-% niedriger ist als der molare Anteil der Baugruppe a).

8. Verfahren zur Herstellung der Copolymere nach einem der Ansprüche 1 bis 7, **dadurch gekennzeichnet, dass** man durch Zusetzung von 3 bis 96 Mol-% eines die Baugruppe a) bildenden Monomers, 3 bis 96 Mol-% eines die Baugruppe b) bildenden Monomers und/oder 0,05 bis 75 Mol-% eines die Baugruppe c) bildenden Monomers in Form einer radikalischen, ionischen oder komplexkoordinativen Substanz-, Lösungs-, Gel-, Emulsions-, Dispersions- oder Suspensionspolymerisation herstellt.

9. Verfahren nach Anspruch 8, **dadurch gekennzeichnet, dass** man 40 bis 80 Mol- % eines die Baugruppe a) bildenden Monomers, 10 bis 55 Mol-% eines die Baugruppe b) bildenden Monomers und/oder 2 bis 30 Mol-% eines die Baugruppe c) bildenden Monomers umsetzt

10. Verfahren nach Anspruch 8 oder 9, **dadurch gekennzeichnet, dass** man die Umsetzung in Form einer Gelpolymerisation in wässriger Phase durchführt.

11. Verfahren nach Anspruch 10, **dadurch gekennzeichnet, dass** die Gelpolymerisation bei einer Temperatur von -5° bis +50°C und einer Konzentration der wässrigen Lösung von 40 bis 70 Gew.-% durchführt.

12. Verwendung der Copolymere nach einem der Ansprüche 1 bis 7 als Stabilisierer für wässrige Baustoffsysteme und wasserbasierende Anstrich- und Beschichtungssysteme.

13. Verwendung nach Anspruch 12, **dadurch gekennzeichnet, dass** die Co- und Terpolymere in einer Menge von 0,01 bis 5 Gew.-% bezogen auf das Trockengewicht des Baustoff-, Anstrich- bzw. Beschichtungssystem eingesetzt werden.

14. Verwendung nach Anspruch 12 oder 13, **dadurch gekennzeichnet, dass** die wässrigen Baustoffsysteme als hydraulische Bindemittel, Zement, Kalk, Gips, Anhydrit usw. enthalten.

15. Verwendung nach einem der Ansprüche 12 bis 14, **dadurch gekennzeichnet, dass** die Co- oder Terpolymere in Form einer wässrigen Lösung mit einem Feststoffgehalt von 0,2 bis 3 Gew.-% eingesetzt werden.

## Claims

1. Water-soluble copolymers and terpolymers which contain sulpho groups and have a number average molecular weight of from 50 000 to 20 000 000 g/mol and consist of:
a) from 3 to 96 mol% of structural groups of the formula I 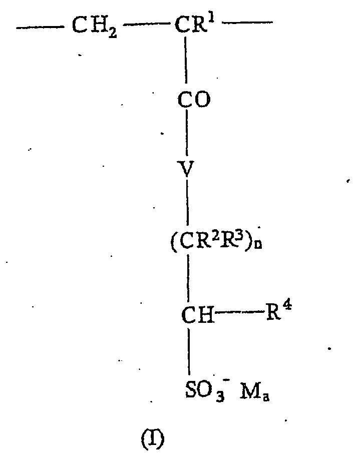 where R¹ = hydrogen or methyl,
R², R³, R⁴ = hydrogen, an aliphatic hydrocarbon radical having from 1 to 6 carbon atoms, a phenyl radical which may be unsubstituted or substituted by methyl groups,
V = NH or oxygen,
M = hydrogen, a monovalent or divalent metal cation, ammonium or an organic amine radical,
n = 1 to 5,
a = ½ or 1,
b) from 3 to 96 mol% of structural groups of the formula II 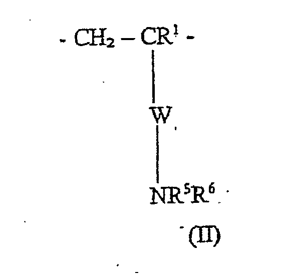 where W = -CO (O)- (CH₂)ₓ-, -CO-NR²- (CH₂)ₓ-,
x = 1 to 6,
R⁵ and R⁶ = hydrogen, a substituted or unsubstituted aliphatic hydrocarbon radical having from 1 to 20 carbon atoms, a cycloaliphatic hydrocarbon radical having from 5 to 8 carbon atoms, an aryl radical having from 6 to 14 carbon atoms, and R¹ and R² are as defined above,
and/or
c) from 0.05 to 75 mol% of structural groups of the formula III 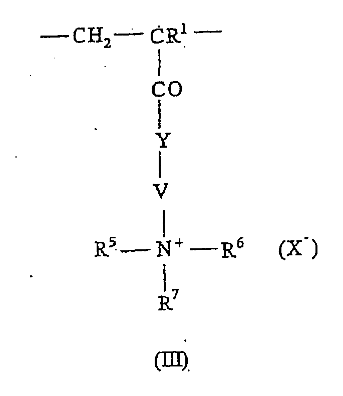
where Y = O, NH or NR⁵,
V = - (CH₂)ₓ-, 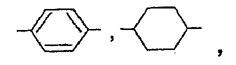 R⁷ = R⁵ or R⁶, -(CH₂)ₓ-SO₃^{⊖}Ma, 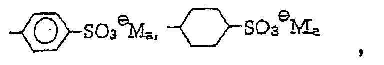 X = halogen, C₁-C₄-alkylsulphate or C₁-C₄-alkylsulphonate
and R¹, R⁵, R⁶, M, a and x are as defined above,
as stabilizer for aqueous building material systems and water-based paint and coating systems.

2. Copolymers according to Claim 1, **characterized in that** the monovalent or divalent cation is a sodium, potassium, calcium or magnesium ion and X = chlorine, bromine, sulphate or methylsulphate.

3. Copolymers according to Claim 1 or 2, **characterized in that** the structural group a) comprises 2-acrylamido-2-methylpropanesulphonic acid or salts thereof.

4. Copolymers according to Claim 1 to 3, **characterized in that** the organic amine radicals are preferably substituted ammonium groups derived from primary, secondary or tertiary C₁-C₂₀-alkylamines, C₁-C₂₀-alkanolamines , C₅-C₈-cycloalkylamines and C₆-C₁₄-arylamines.

5. Copolymers according to one of Claims 1 to 4, **characterized in that** the hydrocarbon or aryl radicals of R⁵ and R⁶ are further substituted with hydroxyl, carboxyl or sulphonic acid groups.

6. Copolymers according to one of Claims 1 to 5, **characterized in that** they comprise from 40 to 80 mol% of the structural group a), from 10 to 55 mol% of the structural group b) and/or from 7 to 25 mol% of the structural group c).

7. Copolymers according to one of Claims 1 to 6, **characterized in that** the mole fraction of the structural group c) is at least 5 mol% lower than the mole fraction of the structural group a).

8. Process for preparing the copolymers according to any of Claims 1 to 7, **characterized in that** one prepares by addition of from 3 to 96mol% of a monomer forming the structural group a), from 3 to 96 mol% of a monomer forming the structural group b) and/or from 0.05 to 75 mol% of a monomer forming the structural group c) in the form of a free-radical, ionic or complex-coordinative bulk, solution, gel, emulsion, dispersion or suspension polymerization.

9. Process according to Claim 8, **characterized in that** from 40 to 80 mol% of a monomer forming the structural group a), from 10 to 55 mol% of a monomer forming the structural group b) and/or from 2 to 30 mol% of a monomer forming the structural group c) are reacted.

10. Process according to Claim 8 or 9, **characterized in that** the reaction is carried out in the form of a gel polymerization in the aqueous phase.

11. Process according to Claim 10, **characterized in that** the gel polymerization is carried out at a temperature of from -5° to +50°C and a concentration of the aqueous solution of from 40 to 70% by weight.

12. Use of the copolymers according to one of Claims 1 to 7 as stabilizers for aqueous building material systems and water-based paint and coating systems.

13. Use according to Claim 12, **characterized in that** the copolymers and terpolymers are used in an amount of from 0.01 to 5% by weight, based on the dry weight of the building material system, paint system or coating system.

14. Use according to Claim 12 or 13, **characterized in that** the aqueous building material systems comprise cement, lime, gypsum plaster, anhydrite, etc., as hydraulic binders.

15. Use according to one of Claims 12 to 14, **characterized in that** the copolymers or terpolymers are used in the form of an aqueous solution having a solids content of from 0.2 to 3% by weight.

## Revendications

1. Copolymères et terpolymères solubles dans l'eau et contenant des groupes sulfo, ayant une masse moléculaire moyenne en nombre de 50 000 à 20 000 000 g/mol, composés de :
a) 3 à 96% molaires de motifs de formule I 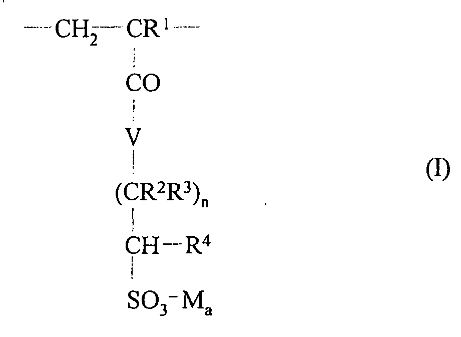 dans laquelle les symboles ont les significations suivantes :
R¹ = hydrogène ou méthyle,
R², R³, R⁴ = hydrogène, résidu hydrocarboné aliphatique de 1 à 6 atomes de carbone, résidu phényle le cas échéant substitué par des groupes méthyle,
V =NH ou oxygène,
M = hydrogène, cation métallique univalent ou divalent, ammonium, ou un résidu amine organique,
n = 1 à 5,
a=½ ou 1,
b) 3 à 96% molaires de motifs de formule II 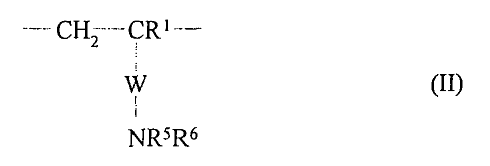 dans laquelle les symboles ont les significations suivantes :
W = -CO(O)-(CH₂)ₓ-, -CO-NR²-(CH₂)ₓ-,
x = 1 à 6,
R⁵ et R⁶ = hydrogène, résidu hydrocarboné aliphatique de 1 à 20 atomes de carbone le cas échéant substitué, résidu hydrocarboné cycloaliphatique de 5 à 8 atomes de carbone, résidu aryle de 6 à 14 atomes de carbone, et
R¹ et R² ont la signification indiquée plus haut,
et/ou
c) 0,05 à 75% molaires de motifs de formule III 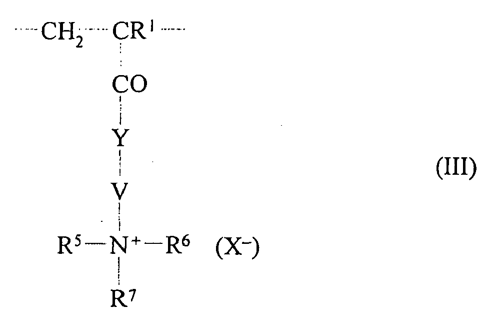
dans laquelle les symboles ont les significations suivantes :
Y = O, NH ou NR⁵
V = -(CH₂)ₓ-, 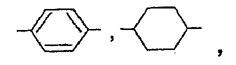 R⁷ = R⁵ ou R⁶, -(CH₂)ₓ-SO₃⁻Mₐ, 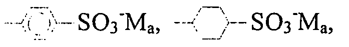 X = halogène, alkylsulfate en C₁ à C₄ ou alkylsulfonate en C₁ à C₄,
et R¹, R⁵, R⁶, M, a et x ont la signification indiquée plus haut,
en tant que stabilisant pour des systèmes de matériaux de construction aqueux et des systèmes de peinture et de revêtement à base aqueuse.

2. Copolymères selon la revendication 1, **caractérisés en ce que** le cation univalent ou divalent est un ion de sodium, de potassium, de calcium ou de magnésium et **en ce que** X est le chlore, le brome, un sulfate ou un méthylsulfate.

3. Copolymères selon la revendication 1 ou la revendication 2, **caractérisés en ce que** le motif a) est un groupe acide 2-acrylamido-2-méthylpropanesulfonique ou un de ses sels.

4. Copolymères selon l'une des revendications 1 à 3, **caractérisés en ce que** les résidus amine organique sont de préférence des groupes ammonium substitués qui sont dérivés d'alkylamines en C₁ à C₂₀, alcanolamines en C₁- à C₂₀, cycloalkylamines en C₅ à C₈ et arylamines en C₆ à C₁₄, primaires, secondaires ou tertiaires.

5. Copolymères selon l'une des revendications 1 à 4, **caractérisés en ce que** les résidus hydrocarbonés ou aryle de R⁵ et R⁶ sont en plus substitués par des groupes hydroxyle, carboxyle ou acide sulfonique.

6. Copolymères selon l'une des revendications 1 à 5, **caractérisés en ce qu'**ils se composent de 40 à 80% molaires de motifs a), de 10 à 55% molaires de motifs b) et/ou de 7 à 25% molaires de motifs c).

7. Copolymères selon l'une des revendications 1 à 6, **caractérisés en ce que** la proportion molaire de motifs c) est inférieure d'au moins 5% molaires à la proportion molaire de motifs a).

8. Procédé de production des copolymères selon l'une des revendications 1 à 7, **caractérisé en ce que**, par ajout de 3 à 96% molaires d'un monomère formant le motif a), de 3 à 96% molaires d'un monomère formant le motif b) et/ou de 0,05 à 75% molaires d'un monomère formant le motif c), sous la forme d'une substance radicalaire, ionique ou de coordination, on prépare un mélange réactionnel de polymérisation en solution, en gel, en émulsion, en dispersion ou en suspension.

9. Procédé selon la revendication 8, **caractérisé en ce que** l'on fait réagir 40 à 80% molaires d'un monomère formant le motif a), 10 à 55% molaires d'un monomère formant le motif b) et/ou 2 à 30% molaires d'un monomère formant le motif c).

10. Procédé selon la revendication 8 ou 9, **caractérisé en ce que** l'on effectue la réaction sous la forme d'une polymérisation en gel en phase aqueuse.

11. Procédé selon la revendication 10, **caractérisé en ce que** la polymérisation en gel se fait à une température de -5° à +50°C et à une concentration de la solution aqueuse de 40 à 70% en poids.

12. Utilisation des copolymères selon l'une des revendications 1 à 7 en tant que stabilisants pour des systèmes de matériaux de construction aqueux et des systèmes de peinture et de revêtement à base aqueuse.

13. Utilisation selon la revendication 12, **caractérisée en ce que** les copolymères et terpolymères sont utilisés en une quantité allant de 0,01 à 5% en poids, rapportée au poids sec du système de matériau de construction, de peinture ou de revêtement.

14. Utilisation selon la revendication 12 ou la revendication 13, **caractérisée en ce que** les systèmes de matériaux de construction aqueux contiennent, en tant que liant hydraulique, du ciment, de la chaux, du plâtre, de l'anhydrite, etc.

15. Utilisation selon l'une des revendications 12 à 14, **caractérisée en ce que** les copolymères ou terpolymères sont utilisés sous la forme d'une solution aqueuse avec une teneur en solides allant de 0,2 à 3% en poids.
